**Europäisches Patentamt**

**European Patent Office**

**Office européen des brevets**

(19)

(11) Publication number : **0 299 993 B1**

# (12) EUROPEAN PATENT SPECIFICATION

(45) Date of publication of patent specification :
25.03.92 Bulletin 92/13

(21) Application number : 88900624.3

(22) Date of filing : 30.11.87

(86) International application number :
PCT/US87/03078

(87) International publication number :
WO 88/05031 14.07.88 Gazette 88/15

(51) Int. Cl.⁵ : **C03B 19/02, C03B 13/12, C03B 37/027, C03B 37/028, C03B 37/14, C03C 25/02**

(54) STRENGTHENING GLASS STRUCTURES.

(30) Priority : 07.01.87 US 1123

(43) Date of publication of application :
25.01.89 Bulletin 89/04

(45) Publication of the grant of the patent :
25.03.92 Bulletin 92/13

(84) Designated Contracting States :
BE CH DE FR GB IT LI NL SE

(56) References cited :
US-A- 2 337 757
US-A- 3 241 934
US-A- 3 483 072
US-A- 3 498 771
US-A- 3 536 373
US-A- 3 589 878
US-A- 3 729 299
US-A- 4 015 965

(73) Proprietor : Hughes Aircraft Company
7200 Hughes Terrace P.O. Box 45066
Los Angeles, California 90045-0066 (US)

(72) Inventor : BAGBY, John, P.
5251 E. Fairlee Ct.
Anaheim Hills, CA 92807 (US)
Inventor : OTIS, Robert, J.
6417 Calle Del Norte
Anaheim, CA 92807 (US)
Inventor : SEERY, Craig, W.
1729 East Pine Avenue No. 6
El Segundo, CA 90245 (US)
Inventor : YANATOVIC, Steven, C.
1230 Dale Street, Apt. 102
Anaheim, CA 92804 (US)

(74) Representative : KUHNEN, WACKER &
PARTNER
Alois-Steinecker-Strasse 22 Postfach 1553
W-8050 Freising (DE)

## Description

This invention relates generally to a method of producing a superior quality of glass resulting in an end product which is substantially stronger than conventional glass and exhibits greater strength consistency than was previously known.

In the past, "tempered" glass was used for strong part requirements. Over the years, a process known variously as "chemical tempering", "ion exchange", or "chemical strengthening" came to be employed to do the same thing. These processes render the outside of a glass in compression while the inside is in tension. "Tempering" in glass is not the same as in metals. It merely consists of rapid cooling (actually "quenching") from the melt, or other high temperature, which causes the outside skin to "solidify" first (glass is a technical liquid of nearly infinite viscosity, not a solid). "Chemical" tempering or "ion exchange" or "chemical strengthening" accomplishes the same result by replacing, for example, sodium ions with "fatter" potassium ions in the surface region. This squeezes the surface together, causing compression there. When the glass beam is bent, the tension side first has to lose all the residual compression before going into tension. Either process can result in a part acting as if it could survive between 207 MPa (mega pascals) and 310.5 MPa in tension (instead of just bending, alone). Some parts have approached 414.0 MPa in this way, but in <u>thick</u> section only, and not reliably or repeatedly.

The compressive strength of glass is not usually a problem. This is primarily due to the fact that existing flaws and micro cracks in the surface do not propagate under compressive stress. Compressive strengths of 1.725 GPa (1.725 giga pascals) are commonly observed.

One problem with the prior art is that it is not reliable statistically. The distribution is skewed, with long tail off in the high strength direction and a short cutoff at lower values. Thus, one can reliably count on achieving only a fraction of the attainable value in tension.

US-A-2 337 757 (Lewis) discloses a compound glass sheet having wire reinforcement embedded in the transparent layers. The wire reinforcement of the known glass has an index of refraction which is not comparable with the index of refraction of said glass.

## SUMMARY OF THE INVENTION

It was with recognition of the state of the prior art with regard to glass that the present invention was conceived and has now been reduced to practice. In brief, this invention comprises a method of strengthening glass-type materials enabling strengths to be achieved which are far in excess of what was previously known.

Generally the method comprises forming a strengthened slab of glass, starting from at least one slab consisting of possibly doped glass, said method comprising the step of integrating into said slab a plurality of reinforcing fibers, whereby said reinforcing fibers consist of reinforcing glass having tensile strength and bending strength which are greater than the tensile strength and bending strength of said glass and wherein the index of refraction of said reinforcing glass is equal to the index of refraction of said glass.

According to an embodiment of the method of the invention the step of integrating said reinforcing fibers into said slab comprises the following steps:

heating said slab of glass to the molten state to provide a slab of molten glass material;

laying into the slab of molten glass material a first plurality of said reinforcing fibers, said reinforcing fibers being late therein to form generally parallel, coplanar, elongated reinforcing fibers; and

cooling said slab to the solid state to thereby form a strengthened slab.

Further embodiments of the latter method are disclosed in the subclaims.

The reinforcement members may be pre-stressed in some instances and may assume a variety of arrangements within the glass substrate. The reinforcement members may be of various materials having greater tensile strength than the glass substrate. In one instance, the reinforcement members themselves may be fiber optic bundles composed of glass fibers with an outer glass cladding which melts at a lower temperature than the inner region. The temperature is raised sufficiently to melt the cladding so as to bond together all of the bundles into an integral structure of optical quality.

Most glasses fail prematurely in tension due to some previously known and some previously unknown causes. This invention renders a stronger, more flexible "glass" product which prevents premature failure in tension, or on the tension side of a beam of glass. The invention also provides a wider range of choice of thicknesses than previously available, and allows for a thinner product as well, all without special mill runs of some certain size.

The impact of the invention is to render such diverse items as glass mirrors, glass photographic plates, dual wavelength antennas, buried mesh antennas, glass windows of spacecraft and aircarft having a dichroic function (i.e. passing one wavelength and reflecting another) all more durable and bendable by reason of greater strength and greater repeatability or consistency in the product's strength. Additionally, glass optical components can now be employed in formerly unacceptable environments, which were thought to require the use of metals, where the use of non-metallic components would otherwise be desireable.

The prior deficiencies of glass have been outlined and explained in an earlier application for patent entitled "Improvements to Glass Structures", Serial No. 868,829, and filed May 29, 1986. In that disclosure, novel methods and means for improvement of those properties are presented. This invention offers other, entirely different, means for improvement of strength in a glass slab, plate, special window, mirror, and the like. The purposes and advantages of this invention are generally the same as those of the earlier disclosure but are accomplished in a new and novel and different manner. Broadly, the goals achieved by the invention include improved strength, impact resistance and surface quality while maintaining the desired transmission, reflectance, and electrical properties needed for each specific application.

There are numerous and significant differences between the reinforcement methods disclosed herein and those well known and commonly used reinforcement methods employed, for example, with concrete structures. The following is a partial listing of these differences:

(a) concrete is opaque to all wavelengths, as is the steel reinforcing rod material; "glasses" and glass fibers are transparent to a wide variety of wavelengths.

(b) "glass" with metal fibers is transparent to at least some wavelengths but reflects others (e.g. microwaves) in a dichroic manner.

(c) The index of refraction of the glass fibers is equal to the index of the glass substrate, although having different other properties (e.g. tensile strength). Thus, the assembly can pass certain wavelengths without any optical path difference or bending.

(d) The rods in concrete are always drastically different from the concrete, i.e. always steel or other metal. In the present invention, the reinforcement is the same (i.e. glass) material as the matrix, or a different type of glass.

(e) The coefficient of expansion of glass fibers and glass surround are substantially the same, whereas concrete and steel differ significantly.

(f) In some instances, the invention allows for use of the "reinforcing rods" for another purpose entirely, and envisions the use of ion exchange or surface etch to obtain the necessary tensile strength. One application would be as a dichroic antenna, with the rods as 1/4 wave mesh, for example, or constructed to block passage entirely.

(g) The system, or process of the invention often approaches the melting or softening temperature of the "rods", by pouring in a hot matrix that has always been a technical liquid (of infinite viscosity when cold). The material of the invention does not "set up" chemically, but solidifies by becoming more viscous.

(h) For purposes of the invention, the fibers or rods can in some cases even be flush with the outer surfaces, or be very close to them, a condition not allowed in concrete applications. According to the invention, rods can also be placed on both top and bottom surfaces for reverse bending.

Other and further features, objects, advantages, and benefits of the invention will become apparent from the following description taken in conjunction with the following drawings. It is to be understood that both the foregoing general description and the following detailed description are exemplary and explanatory but are not restrictive of the invention. The accompanying drawings, which are incorporated in and constitute a part of this invention, illustrate some of the embodiments of the invention and, together with the description, serve to explain the principles of the invention in general terms.

In the Drawings:

Figures 1 and 2 are perspective views illustrating two variations of one embodiment of the invention;

Figures 3, 4, and 5 illustrate, successively, additional embodiments of the invention;

Figure 6A is a perspective view of another embodiment of the invention;

Figure 6B is a perspective view of suitable forms of aggregate material which can be incorporated into the embodiment of Figure 6A;

Figures 7 and 8 are perspective views, respectively, of different variations of still another embodiment of the invention;

Figures 9 and 10 are perspective views of different variations of yet another embodiment of the invention;

Figure 11 is a cross section view of a component of still another embodiment of the invention;

Figures 12 - 15 diagrammatically illustrate, successively, the steps in a process of prestressing strengthening members according to the invention;

Figures 16 and 17 are diagrammatic representations of a replicating process for obtaining optical quality surfaces on an item constructed in accordance with the invention.

The invention utilizes techniques for strengthening beams composed of glass, in which the surface is subject to tension, as in beam loading or bending. One novel feature is the use of elongated reinforcing members

3

in substrates or matrices of glass. The reinforcing members provide the required tensile strength, known to be deficient in vitreous products. These members can be either glass fiber strands, optical glass fibers themselves, or other appropriate elongated materials. The glassy reinforcing members would preferably be composed of optical fiber quality glass which is known to have superior tensile and bending strengths, far exceeding those strengths of ordinary plate glass.

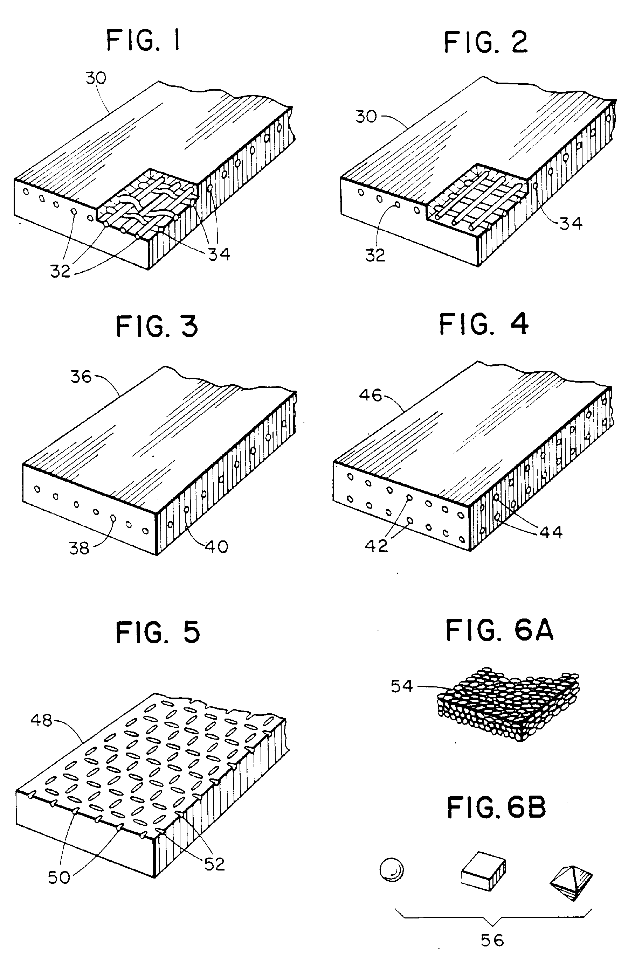

Turn now to the drawings and, initially, to Figure 1 which diagramatically illustrates a melt or pour of glass 30 with a mesh of elongated reinforcing members 32 and 34 near one surface thereof. Plural parallel reinforcing members can extend in one direction only or some can extend transverse to others for increased tensile strength in both directions. In some instances as seen in Figure 2, plural parallel members 32 may be coplanar and separated from plural coplanar parallelmembers 34. In some other instances, as already indicated in Figure 1, the members 32 and 34 can be meshed or interwoven.

It is acceptable to heat the glass 30 to the molten state after which the reinforcing members 32 and 34 are introduced to the molten material in a suitable fashion. It would also be within the purview of the invention to make up a sandwich, consisting of two slabs of softened (hot) glass pressed together with the reinforcing members placed between the slabs. This could be a "triple (or more) decker" sandwich as well, with several alternating layers of glass slabs and reinforcing mats.

In any event, the glass material is subsequently cooled to the solid state with the reinforcing members being thereby integrated into the structure of the slab. Materials for the reinforcing members are glass fibers which have tensile strengths substantially in excess of that of poured or floated glasses, and some of these materials have more desireable electrical or microwave properties. The intentions of the invention would also be served by employing a "CVD" (chemical vapor deposition) method of burying the supporting reinforcing members.

For a complete understanding of the invention, reference may be had to the following materials concerning chemical vapor deposition which are incorporated herein and made a part hereof:

-Proceedings of the Sixth International Conference on Chemical Vapor Deposition, 1977, edited by Lee F. Donoghey et al, Proceedings Volume 77-5, The Electrochemical Society, Inc., Princeton, NJ 08540, especially pp. 191, 192, 531, 538;

-"Zinc Selenide Blanks for Windows and Lens Elements" (Manufacturing Methods and Technology Program), R.N. Donadio et al, Raytheon Corporation, Research Division, May 1979 (AD Number:A077004);

"New Advances in Chemical Vapor Deposited (CVD) Infrared Transmitting Materials", R.N. Donadio et al, CVD Inc., Woburn, MA (Conference Paper: Emerging Optical Materials 25-26 Aug. 1981, San Diego, CA) Proc. SPIE Int. Soc. Opt. Eng., Vol. 297, 65-9, 1981;

-"New Advances in Chemical Vapor Deposited (CVD) Infrared Transmitting Msaterials", R.N. Donadio et al, CVD, Inc., Woburn, MA; Research and Laser Technology, Inc., Rockport, MA; (Proceedings of the Conference: Emerging Optical Materials August 25, 1981, San Diego, CA); Bellington, WA, SPIE - The International Society for Optical Engineering, 1982, p. 65-69.

-"Application of the Low-Temperature CVD Process", Bloss, K.H.; Lukas, H; Battelle Inst., Frankfurt am Main (West Germany), 1973. (Available as Document No. 73N19475 from National Technical Institute of Science, 5285 Port Royal Road, Springfield, VA 22161); and

-"Low-Temperature Silicon Epitaxy by Ultrahigh Vacuum/Chemical Vapor Deposition", B.S. Meyerson, IBM Thomas J. Watson Research Center, Yorktown Heights, NY, Applied Physics Letters (ISSN 0003-6951), Vol. 48, March 24, 1986, p. 797-799.

In the event chemical vapor deposition is employed to bury the supporting reinforcing members, the surrounding matrix (whether 30, 36, 46, 48 shown in Figs. 1-5) could then be of silicon, zinc sulfide, or zinc selenide, for example. After sufficient build up in the vacuum chamber, the resulting structure could be slab milled or ground to the desired outline overall. When the molten or softened glass has solidified into a slab as indicated at 30, or the silicon or other matrix material has been built up to sufficient depth or thickness in a CVD chamber, the faces of the slabs parallel to the planes of the reinforcing members 32 and 34 are first ground down and then highly polished. It has been found preferable to grind the faces of the slab until each face exhibits a surface irregularity of approximately 2.54 ± 1.27 micrometers. Subsequently, those same faces are polished until each face exhibits a surface irregularity of no greater than .0254 ± .0254 micrometers; and a surface roughness (rms), or smoothness, of no greater than $2.54 \times 10^{-4} \pm 2.54 \times 10^{-4}$ micrometers.

Another embodiment is illustrated in Figure 3. In this embodiment, a slab 36 incorporates elongated, high tensile strength coplanar reinforcing members 38 and substantially coplanar reinforcing members 40. These may be interwoven or spaced apart as described above, and are positioned centrally of the opposed surfaces of the slab 36, that is, the reinforcing members 38 and 40 are positioned near to the neutral axis in planes generally equidistant from the opposed surfaces thereof. As with the embodiment of Figures 1 and 2, when the slab 36 returns to the solid state and/or is cooled to room temperature, it is desirable to grind and polish the surfaces as in the previous embodiment.

This can be accomplished at any depth desired, or total thickness required, down to the region of the reinforcing members. Whereas the slab 30 is strongest in tension when the surface nearest the reinforcing members 32 and 34 is put in tension, the slab 36 exhibits equally strong characteristics in tension regardless of which surface assumes a convex shape, the largest values of which occur as the slab is ground down and polished closest to the region of the reinforcing fibers or members.

In figure 4, elongated reinforcing members 42 and 44 are positioned near both opposed surfaces of a slab 46. With subsequent grinding and polishing of the opposed surfaces in the manner generally as described above, the slab 46 can accommodate reverse bending in the same manner as the slab 36, but with a greater thickness of the glass than is possible with the figure 3 embodiment.

Figure 5 illustrates a slab 48 with transversely directed elongated reinforcing members 50 and 52. The slab 48, then, is similar to the slab 30 of Figures 1 and 2 except that, in this instance, the grinding and polishing operation has proceeded to the reinforcing members themselves so that they are, at least partially, flush with the surface of the slab 48. In such an instance, if an optical quality of reflecting surface is desired in the finished part, it has been found desirable to employ optical quality glass fibers as the materials for the reinforcing members because of their superior optical qualities, equal to that of the surface glass matrix.

for optical quality applications requiring transmission, use of optical quality glass fibers having an index equal to the surrounding glass or plastic is required. If clad, then the cladding is restricted to the same index as well.

In another embodiment of the invention as depicted in Figures 6A and 6B, the melt resulting in a slab 54 is "doped" with particles 56 as illustrated in Figure 6B. The particles 56 can be of a variety of shapes and compositions, and can be, for example, ground diamonds, steel balls, microballoons, birefringent crystal fragments, unusual expansion coefficient materials, and the like. Although the use of an aggregate population as provided by the particles 56 solves many problems in providing an improved optical structure, it may offer little improvement in tensile strength unless the arrangement of parts is such that the glass serves as a glue for particles having superior mechanical properties. Of course, it will be appreciated that the structure sense can be reversed such that the particles could be made of the glass and the matrix made of a substance of much less strength, for example, optical grade plastic, cast or CVD silicon.

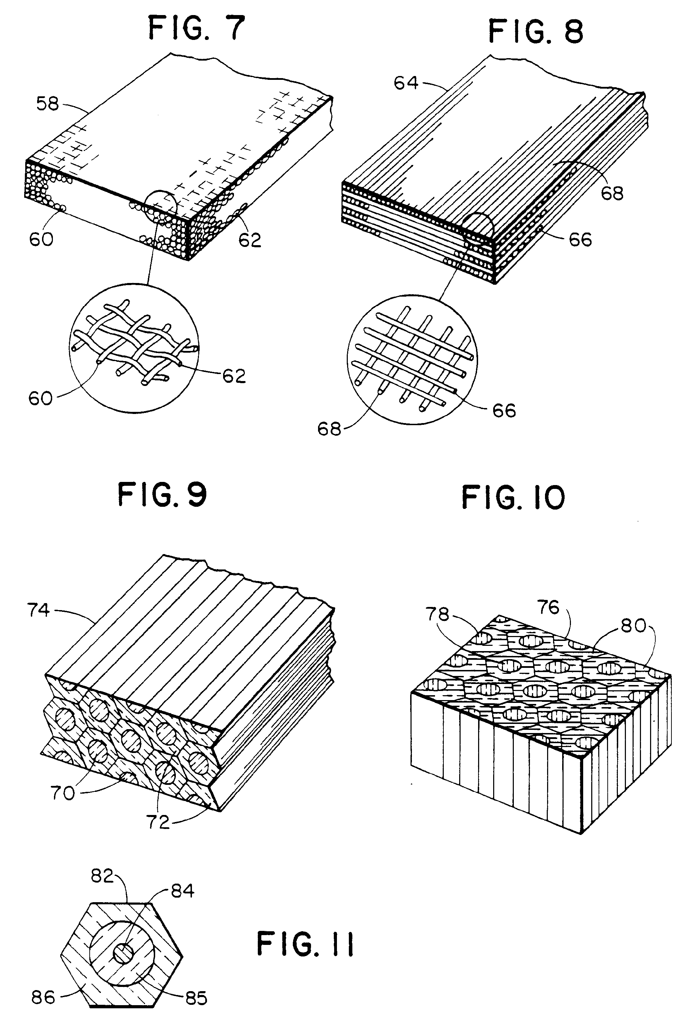

In Figure 7, a slab 58 is illustrated which comprises glass as a matrix filled continuously with layers of mesh formed of interwoven reinforcing members 60 and 62, that is throughout the thickness of the slab. A slab 64, as illustrated in Figure 8, is similar to the slab 58 of Figure 7 except that transversely extending reinforcing members 66 and 68 are not interwoven. Instead, the reinforcing members 66 of a layer are all coplanar and similarly the reinforcing members 68 are all coplanar with layers of the reinforcing members 66 separating layers of reinforcing members 68, and vice versa.

In each of the above disclosed embodiments, it is highly desirable to utilize compatible materials for the matrix and for the elongated reinforcing members. In this manner, the coefficient of expansion of the respective materials can be matched to allow for wide ranges of temperature in the working environment.

The consideration of reinforcing member "show-through", i.e., flush with the slab surface, as discussed with respect to the slab 48 of Figure 5, and problems with extremely thin beams or slabs 36 as illustrated in Figure 3, give rise to the embodiments of Figures 9 and 10. In these embodiments, the reinforcing members and the substrate are essentially identical, comprising a lay up of optical quality glass fibers. However, drawn glass fibers used in communications optics have even better strength and uniform properties, approaching and even exceeding 0.69 GPa in tension. This property is due to the pristine nature of their manufacture, which can be maintained by burying them in the matrix as in Figures 1-8. These types of optical glass fibers are often laid up in a matrix (by themselves) for encoding (non aligned), transferring information (match plates), or focal plane repeating.

However, what is presently proposed is laying them up in a beam or slab formation, or parallel, and bonded together in a unitary fashion, so as to gain strength, not optical advantage. The choice of glass for core and/or clad is for thermal and mechanical properties. They can be either of the clad or unclad variety, depending on required physical and optical (that is, polishability), transmissive, and index of refraction properties. As illustrated in Figure 9, a plurality of optical glass fiber strands 70 provided with an outer cladding 72 are laid up in a known fashion in a parallel relationship. Then they are squeezed together into a generally hexagonal formation as seen in cross section. Preferably, the outer cladding 72 has a melting temperature which is lower than that of the glass fiber strands 70.

The temperature of a slab 74 composed of the glass fibers strands 70 and outer cladding 72 is then raised above the melting point for the outer cladding so that the strands become unified. Such optical quality glass fibers can be made so as to have miniaturized dimensions (that is, having diameters of thousandths of an inch, several 25.4 $\mu$m). The physical bond achieved is excellent and when the opposed surfaces are ground and polished as described above, the outer surfaces of the slab 74 exhibit equally superior reflective optical qualities whether the strands 70 are flush with the surface or not.

Simultaneously, the slab or beam 74 would also exhibit excellent bending strength parallel to the optical fiber layup direction. The contribution of highly polishing the surfaces, and even the edges and corners, is discussed in the copending application Serial no. 868,829 noted above.

A slab 76 illustrated in Figure 10 is similar to the slab 74 in that a plurality of glass fiber strands 78 having an outer cladding 80 are aligned in a mutually parallel arrangement, then squeezed together, into a solid, hexagonal formation. However, in this instance, the longitudinal axis of the fiber strands 78 are transverse, and preferably perpendicular to a plane of the slab 76. When opposite surfaces of the slab 76 are ground and polished in the manner described above, the outer surfaces of the slab 76 also exhibit excellent reflective optical properties while simultaneously possessing high strength characteristics parallel to the fiber layup direction, in this case transverse to the principal surfaces (and not parallel to them).

The present invention is further practiced if a slab 64, as in Figure 8, were to contain alternating layers of fiber bundles, each like Figure 9, so that each layer was perpendicular to the adjacent one. In this manner bi-directional bending strength would be achieved. In such arrangements as Figures 9, 10, or Figure 8 (built up of a series of alternating and perpendicular layers of the type illustrated in Figure 9), there would also be possible the transmission of coherent or incoherent light through the fibers employed for strength purposes, as well as incoherent light transmission through the beam itself (from surface to surface, perpendicular to the fiber layup directions).

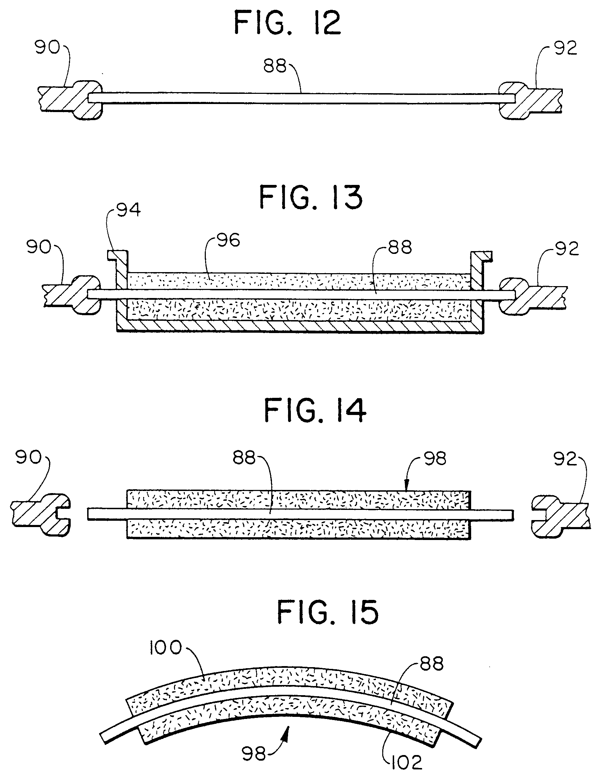

In another embodiment of the invention which is a variation on the constructions illustrated in Figures 8, 9, and 10, is that illustrated in Figure 11. The slabs 74 and 76 utilize glass fiber strands having great strength characteristics surrounded by outer protective cladding glass having less stringent but beneficial properties (i.e. reduced melting temperature, less strength, and no requirement on index unless simultaneous transmission through the reinforcing fibers themselves is desired). The cladding 86 serves as a temporary or permanent protective layer as well as improving the eventual bonding of the reinforcing members 82 together when the resulting slab is of the solid nature as illustrated in Figures 8, 9, and 10 or when the reinforcing members 82 are embedded in a matrix or substrate as illustrated in Figures 1 - 5 and 7 - 8.

In those instances in which reinforcing members are employed, prestressing can be employed to obtain even greater strength characteristics for those instances in which the finished product is subjected to bending stresses. As illustrated in Figure 12, a reinforcing member 88 is diagrammatically illustrated as being held at its opposite ends by suitable grippers 90 and 92. These grippers draw the member 88 in opposite directions so that it is stretched beyond rest to a tension of some fraction of its yield strength, for example, 30%. As shown in Figure 13, a plurality of such stretched reinforcing members 88 would then be suitably placed on a mold box 94 in the still-tensioned condition. Thereafter, a glass matrix or substrate 96 is poured into the mold box and allowed to solidify. After solidification, the grippers 90 and 92 are released (see Fig. 14), thereby imparting compressive stresses in a resulting slab 98. The benefit thereby derived resides in the fact that this initial compression in the slab must be overcome before any tensile stress appears in the matrix or substrate. The effect is similar to the process of chemical tempering which occurs in ion exchanged glass, but here the compressive stress extends down to the core of the entire part instead of being mostly a near surface phenomenon.

A further application of the invention, regarding prestressed members, may employ the CVD process wherein a vapor deposited matrix or substrate is imposed on and around the prestressed rods. This would include such materials as vapor deposited (smoked) fused silica.

By way of example, in a typical instance, the reinforcing member 88 may be subjected by the grippers 90 and 92 to a tensile stress of 207 MPa. When the matrix or substrate solidifies and the grippers 90 and 92 are removed, as illustrated in Figure 14, the tensile stress in each member is partially transferred to the slab 98 in a form of a compressive stress of, for example, 138 MPa. When the reinforcing member 88 is "relaxed", as illustrated in Figure 14, a certain amount of residual tensile stress remains in the reinforcing member itself, for example, 103.5 MPa. If, then, the slab 98 is bent as illustrated in Figure 15, by a force of 207 MPa acting centrally from beneath, a convex surface 100 will exhibit a stress of 69.0 MPa in tension (that is, 207 MPa applied tensile stress minus 138 MPa initial compressive stress). Similarly, a concave surface 102 exhibits a compressive stress of 345.0 MPa (that is, 207 MPa applied compressive stress plus 138 MPa initial compressive stress).

Since conventional glass customarily fails at approximately 69.0 MPa in tension, and 690 MPa in compression, the slab 98 employing a plurality of prestress reinforcing members 88 can well survive the 207 MPa (30,000 psi) force to which it is subjected, by way of example. As for the reinforcing member 88 itself, if it is positioned within the slab 98 midway between the surfaces 100 and 102, it will continue to exhibit the tensile stress of 103.5 MPa to which it had "relaxed" following solidification of the substrate or matrix 96 and release of the grippers 90 and 92, being on the neutral "axis" of the beam. Departure from this central position will cause slight curvature to arise in the member 88. If not done deliberately, such curvature can be ground and polished away if desired.

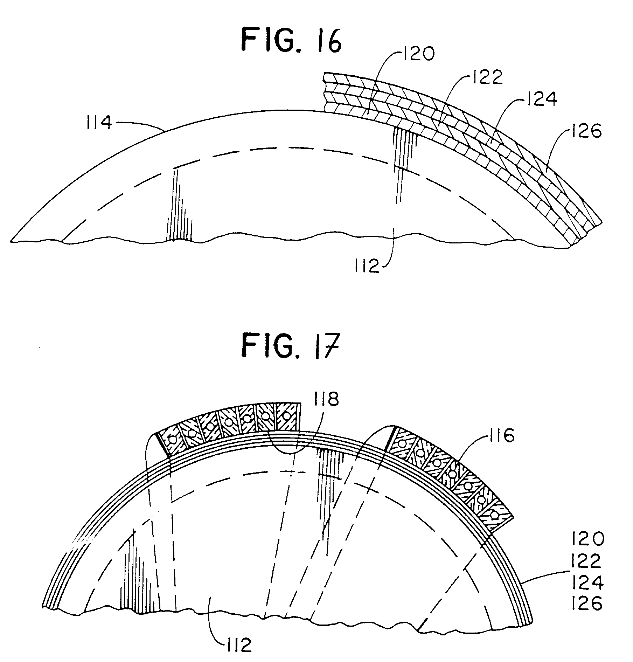

Optical surfaces can be replicated onto any strengthened items 116. The replicating process is generally illustrated in Figures 16 and 17. According to this process, a complimentary or negative glass master 112 is provided with a contoured outer surface 114 having generally the configuration of an item 116 (Figure 17) whose surface 118 is to be rendered optical quality. In preparation for receiving the item 116 which may have been constructed in accordance with Figures 12-15, or Figures 1-11, on the outer surface 114, the outer surface 114 is first figured and highly polished to the extent discussed previously and in a known manner.

Thereafter, the contoured surface is coated, in sequence, with layers of a suitable parting agent 120 (which is usually proprietary to the user); a suitable overcoating (for the part-to-be) 122 such as silicon monoxide; a suitable reflecting material 124 such as gold, silver, or aluminum; and a suitable bonding agent 126 to attach the optical surface to the substrate 116. The bonding agents commonly used are: Armstrong A-12 or Narmco epoxies, silicon cements such as RTV, and Uralane 5753. The choice of bonding agent is determined by coefficient of expansion considerations and/or the end application of the replicated part. The bond can even be layered or built up of several components. Some are chosen to slightly contract or expand upon curing. Some are chosen for rigidity or flexibility considerations.

The purpose of the bonding agent 126 is to assure integrity of the various layers with the item 116 being coated. The parting agent 120 serves to assure that the coated item 116 can be readily removed from the outer surface 114 of the glass master 112 without damage to the reflecting material 124. The purpose of the overcoating 122 is to protect the reflecting material 124 but without diminishing its optical quality. It is noteworthy that the bonding agent 126 can also be chosen as to generally match the thermal properties of the surround of plastic or other material in the item 116 to assure that often occurring problems with temperature excursions in use will not occur, such as in cryogenic applications.

When the item 116 has been received on the glass master 112 in a customary manner and for a proper length of time for curing and set up, the item 116 is then removed with the reflecting material 124 and overcoating 122 still intact. It will be appreciated that this same procedure can be used in preparing optical surfaces for the previously described embodiments. The procedure is particularly beneficial for that situation illustrated in Figure 5 in which the slab 48 has been ground and polished to the extent that the reinforcing members 50 and 52 are actually visible at one surface thereof. Experience has also shown that polishing with water, previously a primary lubricant used for polishing actually causes propagation of microcracks in any vitreous matrix thereby impairing optical quality as well as substantially reducing the strength of the item. By using the replicating procedure just described and as diagrammatically illustrated in Figures 16 and 17, an exceptional optical surface can be achieved without the need to grind and polish each individual item, and without diminution of strength.

The following table presents various of the embodiments disclosed with preferred usages for each embodiment:

| Embodiment | Preferred usage |
|---|---|
| Glass fibers of equal index to surround | 1. Clear windows of appropriate wave length, contoured shapes, (i.e. dishes, lenses, domes) for appropriate wavelengths. |
| | 2. Mirror applications, any wave length. |
| | 3. Non-coherent window (shower door, floors, walls). |
| | 2, 3, |
| | 15. Visible and infrared dichroic. |
| Concentric glass fibers, i.e. core and clad: both of equal index to each other and surround (unequal melt temperatures and strengths allowed) | 1, 2, 15. |
| Glass and any outer clad to it of equal index to surround | 2,3 4. Radio or radar antenna (i.e. formed dish. |

8

| | |
|---|---|
| | 5. Dichroic window for in Erared and radar/ microwave separation |
| | 6. Dichroic window for visible and radar/radio separation |
| "Rods" in outer parts of beam, or rods crossed (compound) in outer parts | 8. Bi stress beams applications (reverse bending). 9. Pre stressed beams, or bistress and prestress. |
| "Rods" in center or on neutral axis of part, single or compound | 9. |
| Rods inside one surface, single or compound | 7. Beams with single direction tensile stress. 10. Prestressed, single direction tensile stress. |
| Surround doped with ind. diamond "dust", metal particles, bi-refringent crystals (aligned), particles having unusual properties (i.e. super-strong, unusual expansion coefficients or elastic moduli), particles having no self coherence or adhesion with themselves | 1, 2, 3, 4. 11. Complete reflectors for all non infra red or visible rays. 12. Super strong interiors with glassy surfaces. 13. Unusual elastic or expansive properties in an (otherwise) glassy part. 14. Polaroid or bi-refringent filters of high strength and/ or integrity in a hostile environment. |

## Claims

1. A method of forming a strengthened slab of glass, starting from at least one slab (36, 46, 48, 74, 76, 88, 98) consisting of possibly doped glass, said method comprising the step of integrating into said slab a plurality of reinforcing fibers characterized in that said reinforcing fibers ( 32, 34, 48, 40, 42, 44, 50, 52, 70, 78, 104) consist of reinforcing glass having tensile strength and bending strength which are greater than the tensile strength and bending strength of said glass and wherein the index of refraction of said reinforcing glass is equal to the index of refraction of said glass.

2. A method according to claim 1 wherein the step of integrating said reinforcing fibers (32, 34, 38, 40, 42, 44, 50, 52, 70, 78, 104) into said slab (36, 46, 48, 74, 76, 88, 98) comprises the steps of:

heating said slab of glass to the molten state to provide a slab of molten glass material;

laying into the slab of molten glass material a first plurality of said reinforcing fibers (32, 38, 42, 50), said reinforcing fibers being laid therein to form generally parallel, coplanar elongated reinforcing fibers; and

cooling said slab to the solid state to thereby form a strengthened slab.

3. A method as set forth in claim 2 including the step of integrating into the molten slab a second plurality of generally parallel, coplanar elongated reinforcing fibers (34, 40, 44, 52) similar to the first plurality of reinforcing fibers and extending in a direction transverse to that of the first plurality.

4. A method as set forth in claim 2 wherein the slab (30, 46) has substantially parallel planar opposed faces and wherein the first (32, 42) and second (34, 44) plurality of reinforcing members are positioned nearer one of the opposed faces than the other.

5. A method as set forth in claim 2 wherein the elongated reinforcing members of the first plurality (32, 42) are interwoven with those of the second plurality (34, 44) to form a reinforcement fabric.

6. A method as set forth in claim 2 wherein the slab has substantially parallel planar opposed faces and wherein the first and second plurality of reinforcing members are positioned to lie in planes substantially equidistant from the opposed faces.

7. A method as set forth in claim 5 including the steps of:

grinding the faces of the slab until each face exhibits a surface irregularity of approximately $2.54 \pm 1.27$ $\mu$m; and

polishing the faces of the slab until each face exhibits a surface irregularity of no greater than $2.54 \times 10^{-2} \pm 2.54 \times 10^{-2}$ $\mu$m, and a surface roughness of no greater than $254 \pm 254$ pm.

8. A method as set forth in claim 2 wherein the slab has substantially parallel planar opposed faces and wherein said first plurality of reinforcing fibers are positioned in a plane parallel with and proximate to one of the faces and wherein said second plurality of glass reinforcement fibers are positioned in a plane parallel with and proximate to the other of the faces.

9. A method as set forth in claim 8 including the steps of:

grinding the faces of the slab until each face exhibits a surface irregularity of approximately $2.54 \pm 1.27$ $\mu$m; and

polishing the faces of the slab until each face exhibits a surface irregularity of no greater than $2.54 \times 10^{-2} \pm 2.54 \times 10^{-2}$ $\mu$m and a surface roughness of no greater than $2.54 \times 10^{-4} \pm 2.54 \times 10^{-4}$ $\mu$m.

10. A method as set forth in claim 2 wherein the slab has a substantially planar face and wherein the first and second plurality of reinforcing fibers are positioned adjacent the face, including the steps of:

grinding the faces of the slab until each face exhibits a surface irregularity of approximately $2.54 \pm 1.27$ $\mu$m; and

polishing the faces of the slab until each face exhibits a surface irregularity of no greater than $2.54 \times 10^{-4} \pm 2.54 \times 10^{-4}$ $\mu$m.

11. A method as set forth in claim 2 including the step of integrating into the slab successive layers of the first plurality and of the second plurality of reinforcing fibers.

12. A method as set forth in claim 4 including the step of integrating into the slab successive layers of the reinforcing fabric.

13. A method as set forth in claim 1 comprising the steps of:

heating opposed surfaces of a pair of slabs consisting essentially of glass to a softened state,

inserting between the opposed surfaces the plurality of elongated reinforcing fibers;

pressing the slabs together in a sandwich structure so that the reinforcing glass fibers are embedded in the softened surfaces of the slabs; and

cooling the opposed surfaces of the slabs to the solid state.

14. A method as set forth in claim 13 wherein the slabs are of unequal thickness.

15. A method as set forth in claim 14 and/or 15 including the step of prestressing the reinforcing members prior to cooling of the two slabs.

**Patentansprüche**

1. Verfahren zur Herstellung einer verstärkten Glasplatte, ausgehend von wenigstens einer Platte (36, 46, 48, 74, 76, 88, 98), welche aus möglicherweise dotiertem Glas besteht, wobei das Verfahren den Schritt des Einbaus einer Vielzahl von verstärkenden Fasern in die Platte beinhaltet, dadurch gekennzeichnet, daß die verstärkenden Fasern (32, 34, 48, 40, 42, 44, 50, 52, 70, 78, 104) aus verstärkendem Glas bestehen, das eine größere Zug- und Biegefestigkeit aufweist als besagtes Glas, und der Brechungsindex des verstärkenden Glases mit dem Brechungsindex besagten Glases identisch ist.

2. Verfahren nach Anspruch 1, dadurch gekennzeichnet, daß der Schritt des Einbaus der verstärkenden Fasern (32, 34, 38, 40, 42, 44, 50, 52, 70, 78, 104) in die Platte (36, 46, 48, 74, 76, 88, 98) folgende Schritte beinhaltet:

die Glasplatte in den geschmolzenen Zustand erhitzen, um eine Platte aus geschmolzenem Glasmaterial bereitzustellen;

in die Platte aus geschmolzenem Glasmaterial eine erste Vielzahl der verstärkenden Fasern (32, 38, 42, 50) einlegen, wobei die verstärkenden Fasern derart eingelegt werden, daß im wesentlichen parallele, koplanare, langgezogene verstärkende Fasern ausgebildet werden; und

die Platte in den festen Zustand abkühlen, um dadurch eine verstärkte Platte auszubilden.

3. Verfahren nach Anspruch 2, das den Schritt des Einbaus einer zweiten Vielzahl an im wesentlichen parallelen, koplanaren, langgezogenen verstärkenden Fasern (34, 40, 44, 52), ähnlich der ersten Vielzahl an verstärkenden Fasern, in die geschmolzene Platte beinhaltet, wobei sich die zweite Vielzahl an verstärkenden Fasern quer zur ersten Vielzahl ausdehnt.

4. Verfahren nach Anspruch 2, dadurch gekennzeichnet, daß die Platte (30, 46) im wesentlichen parallele, planare gegenüberliegende Flächen aufweist, wobei die erste (32, 42) und die zweite (34, 44) Vielzahl an verstärkenden Teilen näher an der einen der gegenüberliegenden Flächen als an der anderen angeordnet sind.

5. Verfahren nach Anspruch 2, dadurch gekennzeichnet, daß die langgezogenen verstärkenden Teile der ersten Vielzahl (32, 42) mit denjenigen der zweiten Vielzahl (34, 44) verwoben werden, um eine Verstärkungsstruktur auszubilden.

6. Verfahren nach Anspruch 2, dadurch gekennzeichnet, daß die Platte im wesentlichen parallele, planare gegenüberliegende Flächen aufweist, wobei die erste und die zweite Vielzahl an verstärkenden Teilen so angeordnet sind, daß sie in Ebenen liegen, welche im wesentlichen gleichen Abstand von den gegenüberliegenden Flächen aufweisen.

7. Verfahren nach Anspruch 5, das folgende Schritte beinhaltet:

die Flächen der Platte schleifen, bis jede Fläche eine Oberflächenunregelmäßigkeit von ungefähr 2,54 ± 1,27 µm zeigt; und

die Flächen der Platte polieren, bis jede Fläche eine Oberflächenunregelmäßigkeit von nicht größer als 2,54 x $10^{-2}$ ± 2,54 x $10^{-2}$ µm sowie eine Oberflächenrauhigkeit von nicht größer als 254 ± 254 pm zeigt.

8. Verfahren nach Anspruch 2, dadurch gekennzeichnet, daß die Platte im wesentlichen parallele, planare, gegenüberliegende Flächen aufweist, wobei die erste Vielzahl an verstärkenden Fasern in einer Ebene angeordnet ist, die parallel und in Nachbarschaft zu einer der Flächen steht, und die zweite Vielzahl an Glasverstärkungsfasern in einer Ebene angeordnet ist, die parallel und in Nachbarschaft zur anderen der Flächen steht.

9. Verfahren nach Anspruch 8, das folgende Schritte beinhaltet:

die Flächen der Platte schleifen, bis jede Fläche eine Oberflächenunregelmäßigkeit von ungefähr 2,54 ± 1,27 µm zeigt; und

die Flächen der Platte polieren, bis jede Fläche eine Oberflächenunregelmäßigkeit von nicht größer als 2,54 x $10^{-2}$ ± 2,54 x $10^{-2}$ µm sowie eine Oberflächenrauhigkeit von nicht größer als 2,54 x $10^{-4}$ ± 2,54 x $10^{-4}$ µm zeigt.

10. Verfahren nach Anspruch 2, wobei die Platte eine im wesentlichen planare Fläche aufweist und die erste und zweite Vielzahl an verstärkenden Fasern angrenzend an die Fläche angeordnet sind, folgende Schritte beinhaltend:

die Flächen der Platte schleifen, bis jede Fläche eine Oberflächenunregelmäßigkeit von ungefähr 2,54 ± 1,27 µm zeigt; und

die Flächen der Platte polieren, bis jede Fläche eine Oberflächenunregelmäßigkeit von nicht größer als 2,54 x $10^{-4}$ ± 2,54 x $10^{-4}$ µrm zeigt.

11. Verfahren nach Anspruch 2, das den Schritt des Einbaus von aufeinanderfolgenden Schichten der ersten Vielzahl und der zweiten Vielzahl an verstärkenden Fasern in die Platte beinhaltet.

12. Verfahren nach Anspruch 4, das den Schritt des Einbaus von aufeinanderfolgenden Schichten der Verstärkungsstruktur in die Platte beinhaltet.

13. Verfahren nach Anspruch 1, das folgende Schritte beinhaltet:

gegenüberliegende Oberflächen eines Plattenpaars, das im wesentlichen aus Glas besteht, in einen erweichten Zustand erhitzen,

zwischen die gegenüberliegenden Oberflächen die Vielzahl an langgezogenen verstärkenden Fasern einfügen;

die Platten zu einer Sandwich-Struktur zusammenpressen, so daß die verstärkenden Glasfasern in die erweichten Oberflächen der Platten eingebettet sind; und

die gegenüberliegenden Oberflächen der Platten in den festen Zustand abkühlen.

14. Verfahren nach Anspruch 13, dadurch gekennzeichnet, daß die Platten ungleiche Dicke aufweisen.

15. Verfahren nach Anspruch 14 und/oder 15, das den Schritt der Vorbelastung der verstärkenden Teile vor dem Abkühlen der beiden Platten beinhaltet.

## Revendications

1. Procédé de formation d'une plaque de verre renforcée, à partir d'au moins une plaque (36, 46, 48, 74, 76, 88, 98) constituée de verre pouvant être dopé, ledit procédé comprenant les étapes qui consistent à intégrer dans ladite plaque plusieurs fibres de renfort, caractérisé en ce que lesdites fibres de renfort (32, 34, 48, 40, 42, 44, 50, 52, 70, 78, 104) sont constituées de verre de renfort ayant une résistance à la traction et une résistance à la flexion qui sont supérieures à la résistance à la traction et à la résistance à la flexion dudit verre et dans lequel l'indice de réfraction dudit verre de renfort est égal à l'indice de réfraction dudit verre.

2. Procédé selon la revendication 1, dans lequel l'étape d'intégration desdites fibres de renfort (32, 34, 38, 40, 42, 44, 50, 52, 70, 78, 104) dans ladite plaque (36, 46, 48, 74, 76, 88, 98) comprend les étapes qui consistent :

à chauffer ladite plaque de verre jusqu'à l'état fondu pour produire une plaque de verre fondu ;

à étendre dans la plaque de verre fondu un premier groupe desdites fibres de renfort (32, 38, 42, 50), lesdites fibres de renfort y étant étendues de façon à former des fibres de renfort allongées coplanaires, globalement parallèles ; et

à refroidir ladite plaque jusqu'à l'état solide pour former ainsi une plaque renforcée.

3. Procédé selon la revendication 2, comprenant l'étape qui consiste à intégrer dans la plaque fondue un second groupe de fibres de renfort globalement parallèles, coplanaires, allongées (34, 40, 44, 52) similaire au premier groupe de fibres de renfort et s'étendant dans une direction transversale à celle du premier groupe.

4. Procédé selon la revendication 2, dans lequel la plaque (30, 46) présente des faces opposées planes sensiblement parallèles et dans lequel les premier (32, 42) et second (34, 44) groupes d'éléments de renfort sont placés plus près de l'une des faces opposées que de l'autre.

5. Procédé selon la revendication 2, dans lequel les éléments allongés de renfort du premier groupe (32, 42) sont entrelacés avec ceux du second groupe (34, 44) pour former un tissu de renfort.

6. Procédé selon la revendication 2, dans lequel la plaque présente des faces opposées planes sensiblement parallèles et dans lequel les premier et second groupes d'éléments de renfort sont placés de façon à s'étendre dans des plans sensiblement équidistants des faces opposées.

7. Procédé selon la revendication 5 comprenant les étapes qui consistent :

à rectifier les faces de la plaque jusqu'à ce que chaque face présente une irrégularité de surface d'environ 2,54 $\pm$ 1,27 $\mu$m ; et

à polir les faces de la plaque jusqu'à ce que chaque face présente une irrégularité de surface ne dépassant pas 2,54 x $10^{-2}$ = $\pm$ 2,54 x $10^{-2}$ $\mu$m, une rugosité de surface ne dépassant pas 254 $\pm$ 254 pm.

8. Procédé selon la revendication 2, dans lequel la plaque présente des faces opposées planes sensiblement parallèles et dans lequel ledit premier groupe de fibres de renfort est placé dans un plan parallèle à l'une des faces proche de celle-ci et dans lequel ledit second groupe de fibres de renfort en verre est placé dans un plan parallèle à l'autre des faces et proche de celle-ci.

9. Procédé selon la revendication 8, comprenant les étapes qui consistent :

à rectifier les faces de la plaque jusqu'à ce que chaque face présente une irrégularité de surface d'environ 2,54 $\pm$ 1,27 $\mu$m ; et

à polir les faces de la plaque jusqu'à ce que chaque face présente une irrégularité de surface ne dépassant pas 2,54 x $10^{-2}$ $\pm$ 2,54 x $10^{-2}$ $\mu$m et une rugosité de surface ne dépassant pas 2,54 x $10^{-4}$ $\pm$ 2,54 x $10^{-4}$ $\mu$m.

10. Procédé selon la revendication 2, dans lequel la plaque présente une face sensiblement plane et dans lequel les premier et second groupes de fibres de renfort sont placés à proximité immédiate de la face, comprenant les étapes qui consistent :

à rectifier les faces de la plaque jusqu'à ce que chaque face présente une irrégularité de surface d'environ 2,54 $\pm$ 1,27 $\mu$m ; et

à polir les faces de la plaque jusqu'à ce que chaque face présente une irrégularité de surface ne dépassant pas 2,54 x $10^{-4}$ $\pm$ 2,54 x $10^{-4}$ $\mu$m.

11. Procédé selon la revendication 2, comprenant l'étape qui consiste à intégrer dans la plaque des couches successives du premier groupe et du second groupe de fibres de renfort.

12. Procédé selon la revendication 4, comprenant l'étape qui consiste à intégrer dans ladite plaque des couches successives des fibres de renfort.

13. Procédé selon la revendication 1, comprenant les étapes qui consistent :

à chauffer les surfaces opposées de deux plaques constituées essentiellement de verre jusqu'à un état ramolli,

à insérer entre les surfaces opposées le groupe de fibres allongées de renfort ;

à presser les plaques l'une contre l'autre en une structure en sandwich afin que les fibres de verre de renfort soient encastrées dans les surfaces ramollies des plaques ; et

à refroidir les surfaces opposées des plaques jusqu'à l'état solide.

14. Procédé selon la revendication 13, dans lequel les plaques sont d'une épaisseur inégale.

15. Procédé selon la revendication 14 et/ou 15 comprenant l'étape qui consiste à précontraindre les éléments de renfort avant le refroidissement des deux plaques.

# FIG. 1

30

32

34

# FIG. 2

30

32

34

# FIG. 3

36

38

40

# FIG. 4

46

42

44

# FIG. 5

48

50

52

# FIG. 6A

54

# FIG. 6B

56

# FIG. 7

# FIG. 8

# FIG. 9

# FIG. 10

# FIG. 11

## FIG. 12

## FIG. 13

## FIG. 14

## FIG. 15

FIG. 16

FIG. 17